# EUROPÄISCHE PATENTSCHRIFT

(11) **EP 4 296 811 B1**
(45) Veröffentlichungstag und Bekanntmachung des Hinweises auf die Patenterteilung: **23.04.2025**
(21) Anmeldenummer: 22305911.4
(22) Anmeldetag: 23.06.2022
(51) Int. Cl.: G05B 19/418, B65G 43/00, B65G 54/02

(54) **VERFAHREN ZUM BETREIBEN EINES TRANSPORTSYSTEMS SOWIE TRANSPORTSYSTEM**
METHOD OF OPERATING A TRANSPORT SYSTEM AND TRANSPORT SYSTEM
PROCÉDÉ PERMETTANT DE FAIRE FONCTIONNER UN SYSTÈME DE TRANSPORT, AINSI QUE SYSTÈME DE TRANSPORT

(43) Veröffentlichungstag der Anmeldung: 27.12.2023
(73) Patentinhaber: Schneider Electric Industries SAS, 92500 Rueil-Malmaison (FR)
(72) Erfinder: HOFMANN, Steffen, 97854 Steinfeld (DE); HEID, Jürgen, 97237 Altertheim (DE)
(74) Vertreter: Manitz Finsterwald Patent- und Rechtsanwaltspartnerschaft mbB

(56) Entgegenhaltungen:
- EP-A1- 3 974 927
- EP-A2- 3 196 719
- WO-A1-2017/186619
- US-A1- 2020 017 308

## Beschreibung

Die Erfindung betrifft ein Verfahren zum Betreiben eines Transportsystems, insbesondere eines Multi-Carrier-Systems, welches mehrere Linearmotoren, die aneinandergereiht angeordnet sind und eine Führungsbahn aufweisen, mehrere Transportelemente, die mittels der Linearmotoren entlang der Führungsbahn bewegbar sind, und mehrere Stationen entlang der Führungsbahn umfasst, wobei jedes der Transportelemente einer der Stationen zugeordnet ist. Außerdem betrifft die Erfindung ein Transportsystem, insbesondere Multi-Carrier-System, mit einer Steuereinheit, die ausgebildet ist, das Verfahren auszuführen.

Das Vorsehen von Stationen entlang der Führungsbahn oder Strecke eines Transportsystems ist grundsätzlich bekannt. Derartige Stationen sind mögliche Start- und Zielpunkte für Transportelemente. An den Stationen werden häufig bestimmte Aktionen ausgeführt. Beispielsweise können Transportelemente an den Stationen mit einem Produkt be- oder entladen werden.

Üblicherweise ist jeder Station eine entlang der Strecke vorgelagerte Warteposition zugeordnet. Wenn ein Transportelement zu der nächsten Station geschickt werden soll, erhält es einen Fahrauftrag bis zu der entsprechenden Warteposition. Erst wenn es an der Warteposition eintrifft und dort anhält, übernimmt die empfangende Station und prüft, ob sie bereits von einem anderen Transportelement belegt ist. Erst wenn die Station frei ist, erhält das Transportelement die Freigabe, in die eigentliche Station vorzurücken. Dies bedeutet aber auch, dass das Transportelement selbst dann kurz in der Warteposition hält, wenn die Station bereits bei Eintreffen des Transportelements in der Warteposition frei ist. Zudem werden Transportelemente selbst dann in einer Station oder ihrer Warteposition angehalten, wenn sie einen Fahrauftrag zu einer nachgelagerten Station haben. Die (vorgelagerte) Station stellt dies fest und übergibt das Transportelement erst dann an die nächste (nachgelagerte) Station.

Derartige Übergabepunkte sind bislang nötig, um eine geordnete Übergabe eines Transportelements von einer Station zur nächsten Station zu gewährleisten, sodass jede Station die ihr zugeordneten Transportelemente kennt. Dazu muss außerdem jede Station einen verfügbaren Speicher haben, der der maximalen Anzahl aller Transportelemente auf der Strecke entspricht, da jede Station eingerichtet sein muss, alle Transportelemente gleichzeitig zu verwalten. Bei Übergabe an eine Station wird das jeweilige Transportelement in dem Speicher vermerkt und aus dem Speicher der vorherigen Station entfernt. Das Speichern der Transportelemente bzw. ihrer Indexe erfolgt aber unstrukturiert, sodass zusätzliche Maßnahmen getroffen werden müssen, um die Reihenfolge der der Station zugeordneten Transportelemente entlang der Strecke nachvollziehen zu können, sodass die richtigen Transportelemente angesprochen werden. Dies ist aufwändig und erfordert zusätzlichen Speicher.

Zudem ist das gegebenenfalls mehrfache und teils unnötige Anhalten der Transportelemente während des Fahrauftrags jedoch allein organisatorischen Gesichtspunkten geschuldet und wäre idealerweise zu vermeiden. Die dadurch bedingten Verzögerungen erhöhen sich, je mehr Stationen entlang der Strecke vorgesehen sind.

Die Druckschrift EP 3 974 927 A1 offenbart ein Linearmotorsystem mit mehreren Transportelementen und einem Steuersystem. Darin ist ein Speicher mit einem Referenzarray vorgesehen, welches sich auf bestimmte Elemente des Linearmotorsystems, etwa auf Transportelemente, bezieht und auf Speicheradressen verweist, an denen bestimmte Eigenschaften dieser Elemente gespeichert sind, wie etwa eine Geschwindigkeit oder Beschleunigung. Das Steuersystem verwendet die gespeicherten Eigenschaften, um Steuerbefehle zu erzeugen und diese an die jeweiligen Transportelemente zu senden.

Es ist eine Aufgabe der vorliegenden Erfindung, ein Verfahren zum Betreiben eines Transportsystems und ein Transportsystem mit einem verbesserten Handling von Transportelementen anzugeben.

Diese Aufgabe wird durch den Gegenstand der unabhängigen Ansprüche gelöst. Vorteilhafte Ausgestaltungen sind Gegenstand der Unteransprüche und ergeben sich aus der Beschreibung und den Zeichnungen.

Das erfindungsgemäße Verfahren dient zum Betreiben eines Transportsystems, insbesondere eines Multi-Carrier-Systems, wobei das Transportsystem mehrere Linearmotoren, die aneinandergereiht angeordnet sind und eine Führungsbahn aufweisen, mehrere Transportelemente, die mittels der Linearmotoren entlang der Führungsbahn bewegbar sind, und mehrere Stationen entlang der Führungsbahn umfasst, und wobei jedes der Transportelemente einer der Stationen zugeordnet ist. Das Verfahren weist die folgenden Schritte auf:
- Erzeugen einer Instanz für jedes der Transportelemente,
- Erzeugen einer Liste für jede der Stationen, wobei der Liste die Instanz für jedes der jeweiligen Station zugeordneten Transportelemente zugeordnet wird, und wobei innerhalb der jeweiligen Liste die Instanz eines jeden Transportelements mit der Instanz des Transportelements unmittelbar voraus und mit der Instanz des Transportelements unmittelbar hinter dem betrachteten Transportelement verknüpft wird,
- Übergeben eines Transportelements von einer ersten Station an eine unmittelbar nachfolgende zweite Station und Einfügen der Instanz dieses Transportelements in die Liste der zweiten Station, wenn für das Transportelement ein über die erste Station hinausgehender Fahrauftrag vorliegt,
   wobei das Übergeben der Instanz ereignisgesteuert und unabhängig von einem Übergabepunkt erfolgt, wenn eine vorbestimmte Übergabebedingung erfüllt ist, und
- Ansteuern der Linearmotoren, um Fahraufträge der Transportelemente auszuführen.

Jeder Linearmotor kann insbesondere sechs Außenflächen aufweisen, nämlich Oberseite, Unterseite, Außenseite, Innenseite und zwei Seitenflächen. Dabei sind die Seitenflächen von benachbarten Linearmotoren durch einen geringen Dehnungsspalt von etwa 0,1 mm bis 0,2 mm zueinander beabstandet oder liegen direkt aneinander an. An der Außenseite kann die Führungsbahn für die Transportelemente ausgebildet sein. Die Innenseite ist im Bereich eines Innenraums des Transportsystems angeordnet.

Das Transportsystem bzw. das Multi-Carrier-System kann umlaufend ausgebildet sein, sodass die Linearmotoren eine in sich geschlossene Führungsbahn bilden, entlang der das Transportelement oder die Transportelemente theoretisch endlos in derselben Richtung bewegt werden können. Allerdings ist es auch möglich, dass die Linearmotoren eine offene Führungsbahn mit einem Startpunkt und einem Endpunkt bilden. Entlang der Führungsbahn sind mehrere Stationen angeordnet, die aber in der Regel nur virtuell existieren und beispielsweise durch eine Koordinate der Führungsbahn definiert sind. Derartige Stationen sind mögliche Start- und Zielpunkte für Transportelemente. Beispielsweise kann ein Transportelement einen Fahrauftrag erhalten, der ihn von einer Station zu einer anderen Station fahren lässt, was einem Teilabschnitt der Führungsbahn entspricht. An den Stationen können außerdem Aktionen ausgeführt werden, wie zum Beispiel das Be- oder Entladen des Transportelements mit einem Produkt oder das Koppeln oder Entkoppeln einer bestimmten Anzahl von aufeinanderfolgenden Transportelementen.

Die Transportelemente werden insbesondere magnetisch angetrieben. Dazu weisen die Transportelemente einen oder mehrere Permanentmagnete auf, welche mittels eines sich verändernden und/oder wandernden Magnetfelds, welches von den Linearmotoren erzeugt wird, mit einer Antriebskraft beaufschlagt werden. Die Antriebskraft führt zu einer Bewegung der Transportelemente entlang der Führungsbahn. Insbesondere können die Transportelemente unabhängig und separat voneinander bewegt werden. Mittels der Transportelemente können dadurch beispielsweise Werkstücke oder Produkte entlang der Führungsbahn transportiert werden.

Um die Transportelemente auf der Führungsbahn zu halten, werden diese bevorzugt mittels einer Anziehungskraft in einer zu einer Bewegungsrichtung des Transportelements senkrechten Richtung zu der Führungsbahn hingezogen. Somit verläuft die Anziehungskraft auch senkrecht zu der Antriebskraft. Die Anziehungskraft verläuft bevorzugt von der Führungsbahn hin zu den Linearmotoren bzw. zu den Spulen des Linearmotors. Die Anziehungskraft wird üblicherweise dadurch erzeugt, dass der Magnet des Transportelements von einem magnetisch leitfähigen Stator des jeweiligen Linearmotors angezogen wird.

Das Transportelement kann auch als Carrier, Mover oder Läufer, der Linearmotor hingegen auch als Stator bezeichnet werden.

Das Erzeugen einer Instanz für jedes der Transportelemente bedeutet, dass jedes auf der Strecke oder Führungsbahn befindliche Transportelement ein virtuelles Abbild zugeordnet erhält, wobei die Instanzen vorzugsweise identisch aufgebaut sind. Es wird gleichsam ein Instanzenpool angelegt, sodass für jedes Transportelement genau eine Instanz vorhanden ist. Jedes der Transportelemente, und damit auch jede Instanz, ist genau einer der Stationen zugeordnet, wobei das Transportelement bzw. die Instanz auch übergeben werden kann, beispielsweise von einer Station an die entlang der Führungsbahn nachfolgende Station.

Jede Station erhält außerdem die Liste mit den der Station aktuell zugewiesenen Instanzen zugeordnet. Dadurch, dass innerhalb der jeweiligen Liste die Instanz eines jeden Transportelements mit der Instanz des Transportelements unmittelbar voraus und mit der Instanz des Transportelements unmittelbar hinter dem betrachteten Transportelement verknüpft ist, kennt die Station die Reihenfolge der ihr zugewiesenen Transportelemente. Eine zusätzliche Verwaltung der Reihenfolge der der Station zugeordneten Transportelemente entlang der Strecke ist dadurch hinfällig, da die Station aufgrund der Liste oder Kette immer das erste Listenelement kennt, welches dem in Bewegungsrichtung vordersten Transportelement entspricht. Insbesondere erteilt die Station immer dem ersten Element der Liste oder Kette, welches mit diesem vordersten Transportelement verknüpft ist, insbesondere auf dessen Index verweist, den nächsten Fahrauftrag.

Bei der Instanz des in Fahrtrichtung vordersten Transportelements, das der Station zugewiesen ist, also der ersten Instanz in der Liste, ist die Verknüpfung zur vorderen Instanz vorzugsweise als Verknüpfung ins Leere gekennzeichnet, beispielsweise als NULL-Verweis. Entsprechend verhält es sich bei der Instanz des in Fahrtrichtung letzten Transportelements, das der Station zugewiesen ist, also der letzten Instanz in der Liste. Bei dieser ist vorzugsweise die Verknüpfung zur hinteren Instanz als Verknüpfung ins Leere gekennzeichnet. So ist für die Station jeweils ermittelbar, welche Transportelemente ihr zugewiesen sind, in welcher Reihenfolge diese angeordnet sind und welches das erste und welches das letzte Transportelement in Bewegungsrichtung ist, welches der Station zugeordnet ist. Dadurch, dass für jedes Transportelement global gesehen genau eine Instanz angelegt ist und nicht jede Station ausreichenden Speicher für die maximale Anzahl an Transportelementen auf der Strecke vorhalten muss, kann zudem eine nennenswerte Speicherersparnis erreicht werden.

Soweit von Transportelementen "voraus", "davor", "vor" oder "hinter" dem betrachteten Transportelement gesprochen wird, bezieht sich dies auf die Bewegungsrichtung. Das Transportelement "voraus" oder "davor" bezeichnet also ein in der Bewegungsrichtung vorausfahrendes Transportelement, während das Transportelement "hinter" dem betrachteten Transportelement ein dem betrachteten Transportelement in gleicher Richtung folgendes Transportelement bezeichnet. Eine "nachfolgende" (zweite) Station bezeichnet dementsprechend eine in der Bewegungsrichtung der betrachteten (ersten) Station nachgelagerte Station.

Sofern der Begriff "unmittelbar" im Zusammenhang mit Transportelementen oder Stationen verwendet wird, beinhaltet dieser keine Aussage über zeitliche oder räumliche Abstände, sondern bedeutet, dass zwischen den entsprechenden Stationen oder Transportelementen keine weiteren Stationen bzw. Transportelemente befindlich sind.

Wenn ein Transportelement von einer Station an eine unmittelbar nachfolgende Station übergeben wird, wird die entsprechende Instanz dieses Transportelements in die Liste der zweiten Station eingefügt, das heißt an die letzte Position der Liste angehängt. Entsprechend wird die Instanz aus der Liste der vorhergehenden Station bei der Übergabe entfernt. Mit der Übergabe wechselt vorzugsweise die Zuständigkeit der Stationen für das Transportelement, sodass diese Befehle für das Transportelement ausführen können.

Die Übergabe erfolgt ereignisgesteuert und unabhängig von einem Übergabepunkt (d.h. einem, insbesondere vorbestimmten, Punkt oder Abschnitt auf der Führungsbahn, der von einem Transportelement angefahren oder besetzt werden kann), auch als Triggerpoint bezeichnet. Das heißt es bedarf keines definierten Übergabepunkts, entsprechend beispielsweise einer Warteposition, zu welcher das Transportelement erst bewegt werden muss. Vielmehr kann das Transportelement ereignisbasiert übergeben, wobei das jeweilige Übergabeereignis nahezu frei definierbar ist. Dies ermöglicht es, dass die Station, an die das Transportelement übergeben wird, gegebenenfalls schon vor Ankunft des Transportelements überprüfen kann, ob das Transportelement vor der Station halten muss, da diese belegt ist, oder unmittelbar in die Station einfahren kann. Wenn das Transportelement einen Fahrauftrag zu einer noch weiter nachgelagerten Station ausführt, kann dieses außerdem sofort an die nächste Station weitergegeben werden, noch bevor das Transportelement eintrifft. Somit bleibt ein unnötiges Anhalten in einer Warteposition und auch ein unnötiges Warten in einer Station, die nicht Ziel des Transportelements ist, aus.

In bevorzugter Ausgestaltung ist die Übergabebedingung erfüllt, wenn das Transportelement losgefahren ist und/oder eine vorbestimmte Übergabegeschwindigkeit erreicht hat. Insbesondere kann das Transportelement unmittelbar an die nächste Station übergeben werden, nachdem dieses losgefahren ist. Es muss also nicht erst abgewartet werden, bis das Transportelement in einer Warteposition ankommt. Vielmehr kann die Fahrstrecke zwischen zwei Stationen bereits genutzt werden, damit die Ankunftsstation prüft, ob die Station derzeit frei oder belegt ist und ob sie das Transportelement noch weiter an die ihr nachfolgende Station übergeben muss.

Vorzugsweise weist jede Instanz die Verknüpfung mit der Instanz des Transportelements unmittelbar davor, die Verknüpfung mit der Instanz des Transportelements unmittelbar hinter dem betrachteten Transportelement und ein Identifikationsmerkmal für das jeweilige Transportelement auf. So kann für jedes Transportelement zuverlässig ermittelt werden, ob es noch voraus- oder nachfahrende Transportelemente gibt, die derselben Station zugeordnet sind, und um welches Transportelement es sich handelt.

Insbesondere können die Verknüpfungen jeweils als auf Speicheradressen der jeweiligen Instanz verweisende Pointer oder Zeiger ausgebildet sein. Das Übergeben einer Instanz von der ersten Station an die unmittelbar nachfolgende zweite Station kann dann dadurch erfolgen, dass die Speicheradressen, auf welche die jeweiligen Pointer verweisen, überschrieben (und dabei entsprechend abgeändert) werden. Dies stellt einen besonderen effizienten und schnellen Weg dar, das "Übergeben" der Instanz von einer Liste an eine andere Liste darzustellen.

Genauer gesagt, können die Instanzen, die den bei einer Station befindlichen Transportelementen zugeordnet sind, jeweils eine verkettete Liste bilden. Jede Instanz kann dabei einen Pointer oder Zeiger auf die vorherige und die nachfolgende Instanz aufweisen. Die Instanzen des - auf der Führungsbahn - ersten und letzten Transportelements können dabei einen Null-Pointer (oder Null-Zeiger) aufweisen. Bewegt sich nun das erste Transportelement von einer ersten Station zu einer zweiten Station, so werden die Pointer oder Zeiger derart abgeändert, dass die Instanz des Transportelements in die verkettete Liste der Instanzen der zweiten Station integriert wird.

Das Transportsystem kann außerdem eine Steuereinheit aufweisen, wobei in der Steuereinheit ein Speicherbereich zur Anlage von Instanzen für jedes der Transportelemente vorgehalten wird. So wird ein globaler "Pool" von Instanzen gebildet, bei dem die Instanzen über Referenzieren (z.B. durch die vorgenannten Pointer oder Zeiger) in den Listen oder Ketten verknüpft werden können, ohne dass jede Station einen Speicher für die maximale, theoretisch mögliche Anzahl an Transportelementen vorhalten muss.

Die Erfindung betrifft außerdem ein Transportsystem, insbesondere ein Multi-Carrier-System, welches mehrere Linearmotoren, die aneinandergereiht angeordnet sind und eine Führungsbahn aufweisen, mehrere Transportelemente, die mittels der Linearmotoren entlang der Führungsbahn bewegbar sind, und mehrere Stationen entlang der Führungsbahn umfasst. Außerdem weist das Transportsystem eine Steuereinheit auf, die ausgebildet ist, das erfindungsgemäße Verfahren auszuführen.

Bei dem Transportsystem können die Stationen zumindest teilweise an identischen Positionen entlang der Führungsbahn angeordnet sein. Dadurch, dass es keiner hardwaremäßigen Übergabepunkte oder Triggerpoints bedarf, können Stationen rein virtuell durch Ihre Position oder Koordinate entlang der Führungsbahn definiert werden. Dies schließt auch ein, dass unterschiedliche Stationen an derselben Position oder Koordinate definiert werden können, die dann beispielsweise unterschiedliche Funktionen erfüllen können.

Im Übrigen gelten zu dem erfindungsgemäßen Transportsystem die zum erfindungsgemäßen Verfahren getroffenen Aussagen entsprechend und umgekehrt. Es versteht sich, dass sämtliche hierin genannten Merkmale und Ausführungsformen miteinander kombinierbar sind, sofern nicht etwas gegenteiliges angegeben ist.

Nachfolgend wird die Erfindung schematisch und beispielhaft unter Bezugnahme auf die Zeichnungen beschrieben. Darin zeigt:
- Fig. 1: eine Draufsicht auf ein als Multi-Carrier-System ausgebildetes Transportsystem gemäß einem Ausführungsbeispiel,
- Fig. 2: ein Beispiel für eine Liste einer Station, der drei Transportelemente zugeordnet sind,
- Fig. 3: die Liste aus Fig. 2, nachdem die erste Instanz in der Liste einer nachfolgenden Station übergeben worden ist, und
- Fig. 4: die Liste der nachfolgenden Station, nachdem die erste Instanz der Liste aus Fig. 2 an diese übergeben worden ist.

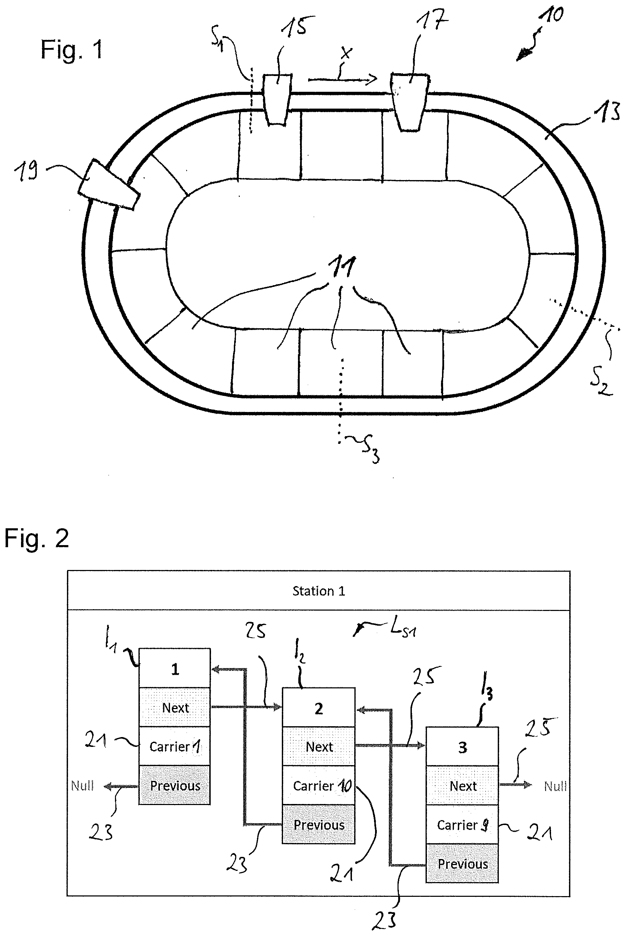

Fig. 1 zeigt schematisch ein als Multi-Carrier-System ausgebildetes Transportsystem 10 in Draufsicht, das eine Vielzahl von Linearmotoren 11 aufweist, welche im vorliegenden Ausführungsbeispiel in sich geschlossen aneinandergereiht angeordnet sind und eine geschlossene Führungsbahn 13 für Transportelemente 15, 17, 19 ausbilden. Zur anschaulichen Beschreibung sind in Fig. 1 nur drei Transportelemente 15, 17, 19 dargestellt, nämlich ein erstes Transportelement 15, ein zweites Transportelement 17, das sich in Bewegungsrichtung x unmittelbar vor dem ersten Transportelement 15 befindet, und ein drittes Transportelement 19, das sich in Bewegungsrichtung x unmittelbar hinter dem ersten Transportelement 15 befindet. "Unmittelbar" ist dabei nicht so zu verstehen, dass sich dies auf einen bestimmten Abstand zwischen den jeweiligen Transportelementen 15, 17, 19 bezieht, sondern bedeutet vielmehr, dass sich zwischen unmittelbar aufeinander folgenden Transportelementen 15, 17, 19 kein weiteres Transportelement befindet.

Die Transportelemente 15, 17, 19 werden durch die Linearmotoren 11 magnetisch angetrieben. Dazu weisen die Transportelemente 15, 17, 19 einen oder mehrere nicht dargestellte Permanentmagnete auf, welche mittels eines sich verändernden und/oder wandernden Magnetfelds, welches von den Linearmotoren 11 erzeugt wird, mit einer Antriebskraft beaufschlagt werden. Die Antriebskraft führt zu einer Bewegung der Transportelemente 15, 17, 19 entlang der Führungsbahn 13. Insbesondere können die Transportelemente 15, 17, 19 unabhängig und separat voneinander bewegt werden. Die Linearmotoren 11 werden von einer nicht dargestellten Steuereinheit angesteuert, um die jeweiligen Transportelemente 15, 17, 19 anzutreiben.

Wie Fig. 1 zu entnehmen ist, sind entlang der Führungsbahn 13 mehrere Stationen S₁, S₂, S₃ angeordnet, die beispielsweise durch ihre Position in der Bewegungsrichtung x entlang der Führungsbahn 13 definiert sein können. An den Stationen können beispielsweise Transportelemente 15, 17, 19 zusammengefasst oder wieder vereinzelt werden oder ein Produkt zum Transport aufnehmen oder wieder abliefern. Beispielsweise können die Transportelemente 15, 17, 19 von der Steuereinheit eine Anweisung erhalten, die das jeweilige Transportelement von Station S₁ zu Station S₂ fahren lässt. Derartige Anweisungen werden auch als Fahrauftrag bezeichnet. In Fig. 1 ist jede der Stationen S₁, S₂, S₃ an einer eigenen Position oder Koordinate entlang der Führungsbahn 13 angeordnet. Grundsätzlich ist alternativ auch umsetzbar, dass die im vorliegenden Ausführungsbeispiel rein virtuell durch Ihre Position oder Koordinate entlang der Führungsbahn 13 definierten Stationen S₁, S₂, S₃ vollständig oder teilweise an identischen Positionen oder Koordinaten angeordnet sind, die dann beispielsweise unterschiedliche Funktionen wahrnehmen können.

Jedes der Transportelemente 15, 17, 19 auf der Strecke ist zu jedem Zeitpunkt genau einer der Stationen S₁, S₂, S₃ zugeordnet. Dies bedeutet, dass die jeweilige Station S₁, S₂, S₃ für die ihr zugeordneten Transportelemente 15, 17, 19 zuständig ist und mittels der Steuereinheit Befehle für die Transportelemente 15, 17, 19 ausführen kann, insbesondere zum Anhalten oder Fahren.

Fig. 2 zeigt ein Beispiel von einer erfindungsgemäßen Zuordnung von drei Transportelementen zu einer Station, wobei Fig. 2 als rein schematische Wiedergabe einer beispielhaft verwendeten Datenstruktur zu verstehen ist.

Erfindungsgemäß wird für jedes Transportelement (auch als Carrier, Mover oder Läufer bezeichnet), das sich auf der Strecke befindet, eine Instanz angelegt. Wenn beispielsweise zwanzig Transportelemente auf der Strecke bewegt werden, so werden zwanzig Instanzen angelegt, sodass ein entsprechender Pool mit einer Instanz für jedes Transportelement vorhanden ist. Dies geschieht insbesondere in einem zentralen Speicherbereich der Steuereinheit, der für die maximale Anzahl Transportelementen zentral vorgehalten wird. Fig. 2 zeigt beispielhaft eine Liste L_{S1} einer Station (als "Station 1" bezeichnet). Die Liste L_{S1} kann auch als Kette bezeichnet werden und enthält drei Instanzen I₁, I₂, I₃, welche jeweils einem Transportelement zugeordnet sind.

Jede der Instanzen I₁, I₂, I₃ ist mit einem Identifikationsmerkmal 21 versehen, welches das der jeweiligen Instanz I₁, I₂, I₃ entsprechende Transportelement eindeutig identifiziert ("Carrier 1", "Carrier 10", "Carrier 9"). Zudem weist jede Instanz I₁, I₂, I₃ eine Verknüpfung 23 mit der Instanz des Transportelements unmittelbar voraus und eine Verknüpfung 25 mit der Instanz des Transportelements unmittelbar hinter dem betrachteten Transportelement auf. Die Verknüpfungen 23, 25 sind insbesondere als Pointer ausgebildet, welche auf die Speicherbereiche der jeweiligen Zielelemente verweisen. Sofern es sich um das in Bewegungsrichtung x vorderste Transportelement oder um das in Bewegungsrichtung x letzte Transportelement handelt, welches der entsprechenden Station zugeordnet ist, sind die jeweiligen Verknüpfungen 23, 25 als Verknüpfung ins Leere gekennzeichnet, nämlich hier als Null-Verweis, siehe Verknüpfung 23 der Instanz I₁ und Verknüpfung 25 der Instanz I₃.

Mit dieser Datenstruktur ergibt sich für die Station zu jedem Zeitpunkt aufgrund ihrer Liste ein Überblick über alle ihr zugeordneten Transportelemente, deren logische Reihenfolge entlang der Bewegungsrichtung x und aufgrund der Null-Verweise auch darüber, welches Transportelement das erste bzw. das letzte Transportelement entlang der Bewegungsrichtung x ist, das der Station zugeordnet ist. Dabei können erhebliche Speichereinsparungen erzielt werden, da nicht für jede Station ausreichend Speicher für die maximale Anzahl an Transportelementen vorgehalten werden muss. Vielmehr wird ein globaler Pool von Instanzen angelegt, die jeweils einer Liste oder Kette zugeordnet sind. Zudem ist eine zusätzliche Verwaltung der Reihenfolge der der Station zugeordneten Transportelemente entlang der Strecke obsolet. Die Station, die immer dem ersten Element der Liste oder Kette, welches mit diesem vordersten Transportelement verknüpft ist, den nächsten Fahrauftrag erteilen wird, kann das entsprechende Transportelement immer über den ersten Eintrag ihrer Liste ansprechen.

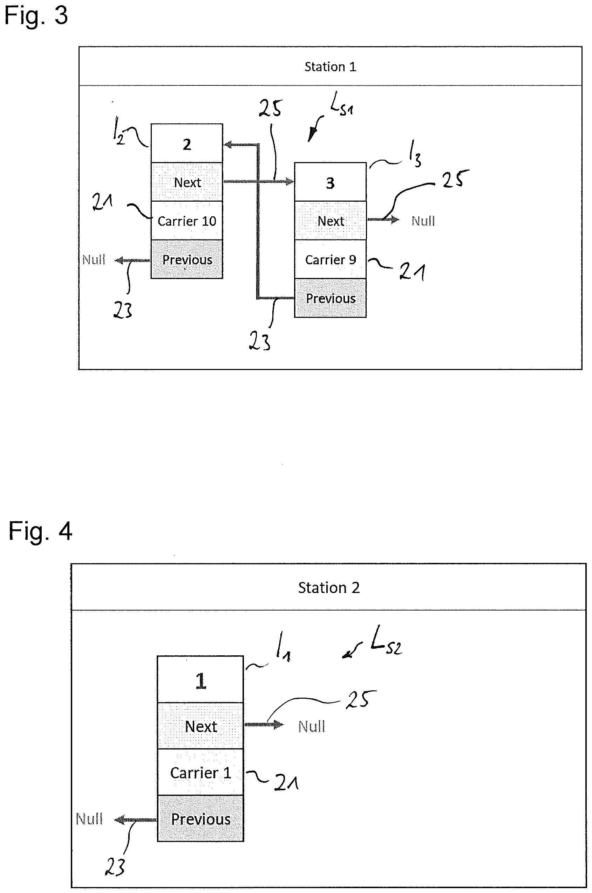

Fig. 3 und 4 veranschaulichen die Übergabe eines Transportelements von einer Station ("Station 1" gemäß Fig. 3) an die ihr unmittelbar in Bewegungsrichtung x nachfolgende Station ("Station 2" gemäß Fig. 4). Fig. 3 entspricht im Wesentlichen Fig. 2, wobei die in Fig. 2 gezeigte Instanz I₁, entsprechend dem in Bewegungsrichtung x vordersten Transportelement, welches der Station zugewiesen ist, bereits an die nächste Station übergeben worden ist und daher aus der Liste L_{S1} entfernt worden ist. Die Verknüpfung 23 der Instanz I₂ wurde entsprechend in einen Null-Verweis geändert, sodass ersichtlich ist, dass "Carrier 10" das in Bewegungsrichtung x vorderste Transportelement ist, welches der "Station 1" derzeit zugeordnet ist.

Gemäß Fig. 4 enthält die Liste L_{S2} der unmittelbar in Bewegungsrichtung x nachfolgenden Station ("Station 2") nach der Übergabe als einzigen Eintrag die Instanz I₁, welche zuvor Station 1 zugeordnet war. Das heißt, Station 2 ist ausschließlich der Carrier 1 zugewiesen. Entsprechend sind beide Verknüpfungen 23, 25 mit einem Null-Verweis versehen.

Das Übergeben der jeweiligen Instanzen kann bei einer Umsetzungen mit Pointern als Verknüpfungen 23, 25 also schon dadurch bewerkstelligt werden, dass die Speicheradressen, auf welche die betroffenen Pointer jeweils verweisen, überschrieben werden, sodass die übergebene Instanz korrekt aus der Liste oder Verkettung der vorangehenden Station entfernt wird und in die Liste oder Verkettung der nachfolgenden Station eingereiht wird.

Die Übergabe erfolgt ereignisgesteuert ohne dass es separater Übergabepunkte bedarf, die auch als "Triggerpoint" bezeichnet werden. Erforderlich ist lediglich eine definierte Übergabebedingung. Dies kann beispielsweise sein, dass sich das Transportelement in Bewegung gesetzt hat oder eine bestimmte Übergabegeschwindigkeit erreicht hat. So ist es beispielsweise möglich, dass das Transportelement sofort nach der Bewegungsaufnahme an die nachfolgende Station übergeben wird, auch wenn es noch gar nicht dort angekommen ist. Ein Anhalten an einer Warteposition oder Übergabeposition ist dann nicht nötig, wenn die empfangende Station frei ist. Sollte der derzeit ausgeführte Fahrauftrag über die empfangende Station hinaus gehen und die empfangende Station frei sein, so kann diese das Transportelement sogar unmittelbar weiter an die nächste nachfolgende Station übergeben. Die Fahrzeit kann so bereits dazu genutzt werden, Befehle für das Transportelement vorzubereiten. Idealerweise können unnötige Anhaltevorgänge für das jeweilige Transportelement vermieden werden.

Das hier beschriebene Verfahren führt damit zum einen zu einer Einsparung von Speicher, zum anderen aber auch zu einem verbesserten und vereinfachten Handling von Transportelementen auf der Strecke.

### Bezugszeichenliste

- 10: Transportsystem
- 11: Linearmotor
- 13: Führungsbahn
- 15: erstes Transportelement
- 17: zweites Transportelement
- 19: drittes Transportelement
- 21: Identifikationsmerkmal
- 23: Verknüpfung
- 25: Verknüpfung

- I₁: Instanz
- I₂: Instanz
- I₃: Instanz
- L_{S1}: Liste (Station 1)
- L_{S2}: Liste (Station 2)
- S₁: Station
- S₂: Station
- S₃: Station
- x: Bewegungsrichtung

## Patentansprüche

1. Verfahren zum Betreiben eines Transportsystems (10), insbesondere eines Multi-Carrier-Systems, welches
mehrere Linearmotoren (11), die aneinandergereiht angeordnet sind und eine Führungsbahn (13) aufweisen,
mehrere Transportelemente (15, 17, 19), die mittels der Linearmotoren (11) entlang der Führungsbahn (13) bewegbar sind, und
mehrere Stationen (S₁, S₂, S₃) entlang der Führungsbahn (13) umfasst, wobei jedes der Transportelemente (15, 17, 19) einer der Stationen (S₁, S₂, S₃) zugeordnet ist, und wobei das Verfahren die folgenden Schritte aufweist:
- Erzeugen einer Instanz (I₁, I₂, I₃) für jedes der Transportelemente (15, 17, 19),
- Erzeugen einer Liste (L_{S1}, L_{S2}) für jede der Stationen (S₁, S₂, S₃), wobei der Liste (L_{S1}, L_{S2}) die Instanz (I₁, I₂, I₃) für jedes der jeweiligen Station zugeordneten Transportelemente (15, 17, 19) zugeordnet wird, und wobei innerhalb der jeweiligen Liste (L_{S1}, L_{S2}) die Instanz (I₁, I₂, I₃) eines jeden Transportelements (15, 17, 19) mit der Instanz (I₁, I₂, I₃) des Transportelements (15, 17, 19) unmittelbar voraus und mit der Instanz (I₁, I₂, I₃) des Transportelements (15, 17, 19) unmittelbar hinter dem betrachteten Transportelement (15, 17, 19) verknüpft wird,
- Übergeben eines Transportelements (15, 17, 19) von einer ersten Station an eine unmittelbar nachfolgende zweite Station und Einfügen der Instanz (I₁, I₂, I₃) dieses Transportelements (15, 17, 19) in die Liste (L_{S2}) der zweiten Station, wenn für das Transportelement (15, 17, 19) ein über die erste Station hinausgehender Fahrauftrag vorliegt,
wobei das Übergeben ereignisgesteuert und unabhängig von einem Übergabepunkt erfolgt, wenn eine vorbestimmte Übergabebedingung erfüllt ist, und
- Ansteuern der Linearmotoren (11), um Fahraufträge der Transportelemente (15, 17, 19) auszuführen.

2. Verfahren nach Anspruch 1,
**dadurch gekennzeichnet, dass** die Übergabebedingung erfüllt ist, wenn das Transportelement (15, 17, 19) losgefahren ist und/oder eine vorbestimmte Übergabegeschwindigkeit erreicht hat.

3. Verfahren nach Anspruch 1 oder 2,
**dadurch gekennzeichnet, dass** jede Instanz (I₁, I₂, I₃) die Verknüpfung (23) mit der Instanz (I₁, I₂, I₃) des Transportelements (15, 17, 19) unmittelbar davor, die Verknüpfung (25) mit der Instanz (I₁, I₂, I₃) des Transportelements (15, 17, 19) unmittelbar hinter dem betrachteten Transportelement (15, 17, 19) und ein Identifikationsmerkmal (21) für das jeweilige Transportelement (15, 17, 19) aufweist.

4. Verfahren nach Anspruch 3,
**dadurch gekennzeichnet, dass** die Verknüpfungen (23, 25) jeweils als auf Speicheradressen der jeweiligen Instanz (I₁, I₂, I₃) verweisende Pointer ausgebildet sind.

5. Verfahren nach Anspruch 4,
**dadurch gekennzeichnet, dass** das Übergeben einer Instanz (I₁, I₂, I₃) von der ersten Station an die unmittelbar nachfolgende zweite Station dadurch erfolgt, dass die Speicheradressen, auf welche die jeweiligen Pointer verweisen, überschrieben werden.

6. Verfahren nach einem der vorstehenden Ansprüche,
**dadurch gekennzeichnet, dass** das Transportsystem (10) eine Steuereinheit aufweist und in der Steuereinheit ein Speicherbereich zur Anlage von Instanzen (I₁, I₂, I₃) für jedes der Transportelemente (15, 17, 19) vorgehalten wird.

7. Verfahren nach einem der vorstehenden Ansprüche,
**dadurch gekennzeichnet, dass** die Stationen (S₁, S₂, S₃) zumindest teilweise an identischen Positionen entlang der Führungsbahn (13) angeordnet sind.

8. Transportsystem (10), insbesondere Multi-Carrier-System, welches mehrere Linearmotoren (11), die aneinandergereiht angeordnet sind und eine Führungsbahn (13) aufweisen, mehrere Transportelemente (15, 17, 19), die mittels der Linearmotoren (11) entlang der Führungsbahn (13) bewegbar sind, und mehrere Stationen (S₁, S₂, S₃) entlang der Führungsbahn (13) umfasst
**gekennzeichnet durch** eine Steuereinheit, die ausgebildet ist, das Verfahren nach einem der vorstehenden Ansprüche auszuführen.

9. Transportsystem (10) nach Anspruch 8,
**dadurch gekennzeichnet, dass** die Stationen (S₁, S₂, S₃) zumindest teilweise an identischen Positionen entlang der Führungsbahn (13) angeordnet sind.

## Claims

1. A method for operating a transport system (10), in particular a multi-carrier system, that comprises
a plurality of linear motors (11) which are arranged in a row and which have a guide track (13),
a plurality of transport elements (15, 17, 19) which can be moved along the guide track (13) by means of the linear motors (11), and
a plurality of stations (S₁, S₂, S₃) along the guide track (13),
wherein each of the transport elements (15, 17, 19) is associated with one of the stations (S₁, S₂, S₃), and wherein the method has the following steps:
- generating an instance (I₁, I₂, I₃) for each of the transport elements (15, 17, 19),
- generating a list (L_{S1}, L_{S2}) for each of the stations (S₁, S₂, S₃), wherein the instance (I₁, I₂, I₃) for each of the transport elements (15, 17, 19) associated with the respective station is associated with the list (L_{S1}, L_{S2}), and wherein, within the respective list (L_{S1}, L_{S2}), the instance (I₁, I₂, I₃) of each transport element (15, 17, 19) is linked to the instance (I₁, I₂, I₃) of the transport element (15, 17, 19) directly ahead of the observed transport element (15, 17, 19) and to the instance (I₁, I₂, I₃) of the transport element (15, 17, 19) directly behind the observed transport element (15, 17, 19),
- transferring a transport element (15, 17, 19) from a first station to a directly following second station and inserting the instance (I₁, I₂, I₃) of this transport element (15, 17, 19) into the list (L_{S2}) of the second station if a transport job that goes beyond the first station is present for the transport element (15, 17, 19),
wherein the transfer takes place in an event-controlled manner and independently of a transfer point if a predetermined transfer condition is fulfilled, and
- controlling the linear motors (11) to execute travel jobs of the transport elements (15, 17, 19).

2. A method according to claim 1,
**characterized in that** the transfer condition is fulfilled when the transport element (15, 17, 19) has set off and/or has reached a predetermined transfer speed.

3. A method according to claim 1 or 2,
**characterized in that** each instance (I₁, I₂, I₃) has the link (23) to the instance (I₁, I₂, I₃) of the transport element (15, 17, 19) directly in front of the observed transport element (15, 17, 19), the link (25) to the instance (I₁, I₂, I₃) of the transport element (15, 17, 19) directly behind the observed transport element (15, 17, 19), and an identification feature (21) for the respective transport element (15, 17, 19).

4. A method according to claim 3,
**characterized in that** the links (23, 25) are each configured as pointers referring to memory addresses of the respective instance (I₁, I₂, I₃).

5. A method according to claim 4,
**characterized in that** the transfer of an instance (I₁, I₂, I₃) from the first station to the directly following second station takes place by overwriting the memory addresses to which the respective pointers refer.

6. A method according to any one of the preceding claims,
**characterized in that** the transport system (10) has a control unit and a memory area for creating instances (I₁, I₂, I₃) for each of the transport elements (15, 17, 19) is provided in the control unit.

7. A method according to any one of the preceding claims,
**characterized in that** the stations (S₁, S₂, S₃) are at least partly arranged at identical positions along the guide track (13).

8. A transport system (10), in particular a multi-carrier system, that comprises a plurality of linear motors (11) which are arranged in a row and which have a guide track (13), a plurality of transport elements (15, 17, 19) which can be moved along the guide track (13) by means of the linear motors (11), and a plurality of stations (S₁, S₂, S₃) along the guide track (13),
**characterized by** a control unit which is configured to carry out the method according to any one of the preceding claims.

9. A transport system (10) according to claim 8,
**characterized in that** the stations (S₁, S₂, S₃) are at least partly arranged at identical positions along the guide track (13).

## Revendications

1. Procédé de fonctionnement d'un système de transport (10), en particulier d'un système multi-chariots, qui comprend
plusieurs moteurs linéaires (11) qui sont agencés les uns à côté des autres et qui présentent une voie de guidage (13),
plusieurs éléments de transport (15, 17, 19) qui peuvent être déplacés le long de la voie de guidage (13) au moyen des moteurs linéaires (11), et
plusieurs stations (S₁, S₂, S₃) le long de la voie de guidage (13),
dans lequel chacun des éléments de transport (15, 17, 19) est associé à l'une des stations (S₁, S₂, S₃), et dans lequel le procédé présente les étapes suivantes consistant à :
- générer une instance (I₁, I₂, I₃) pour chacun des éléments de transport (15, 17, 19),
- générer une liste (L_{S1}, L_{S2}) pour chacune des stations (S₁, S₂, S₃), dans lequel l'instance (I₁, I₂, I₃) pour chacun des éléments de transport (15, 17, 19) associé à la station respective est associée à la liste (L_{S1}, L_{S2}), et dans lequel, à l'intérieur de la liste respective (L_{S1}, L_{S2}), l'instance (I₁, I₂, I₃) d'un élément de transport (15, 17, 19) quelconque est reliée à l'instance (I₁, I₂, I₃) de l'élément de transport (15, 17, 19) directement devant et à l'instance (I₁, I₂, I₃) de l'élément de transport (15, 17, 19) directement derrière l'élément de transport (15, 17, 19) considéré,
- transférer un élément de transport (15, 17, 19) d'une première station à une deuxième station directement suivante et introduire l'instance (I₁, I₂, I₃) de cet élément de transport (15, 17, 19) dans la liste (L_{S2}) de la deuxième station, quand il existe, pour l'élément de transport (15, 17, 19), un ordre de déplacement sortant de la première station,
dans lequel le transfert s'effectue en fonction de l'événement et indépendamment d'un point de transfert, quand une condition de transfert prédéterminée est satisfaite, et
- piloter les moteurs linéaires (11) pour exécuter des ordres de déplacement des éléments de transport (15, 17, 19).

2. Procédé selon la revendication 1,
**caractérisé en ce que** la condition de transfert est satisfaite quand l'élément de transport (15, 17, 19) est parti et/ou a atteint une vitesse de transfert prédéterminée.

3. Procédé selon la revendication 1 ou 2,
**caractérisé en ce que** chaque instance (I₁, I₂, I₃) présente la liaison (23) avec l'instance (I₁, I₂, I₃) de l'élément de transport (15, 17, 19) directement devant, la liaison (25) avec l'instance (I₁, I₂, I₃) de l'élément de transport (15, 17, 19) directement derrière l'élément de transport (15, 17, 19) considéré, et une caractéristique d'identification (21) pour l'élément de transport (15, 17, 19) respectif.

4. Procédé selon la revendication 3,
**caractérisé en ce que** les liaisons (23, 25) sont chacune réalisées comme un pointeur se référant aux adresses mémoire de l'instance (I₁, I₂, I₃) respective.

5. Procédé selon la revendication 4,
**caractérisé en ce que** le transfert d'une instance (I₁, I₂, I₃) de la première station à la deuxième station directement suivante s'effectue par écrasement des adresses mémoire auxquelles se réfèrent les pointeurs respectifs.

6. Procédé selon l'une quelconque des revendications précédentes,
**caractérisé en ce que** le système de transport (10) présente une unité de commande et **en ce qu'**il est réservé, dans l'unité de commande, un espace mémoire pour créer des instances (I₁, I₂, I₃) pour chacun des éléments de transport (15, 17, 19).

7. Procédé selon l'une quelconque des revendications précédentes,
**caractérisé en ce que** les stations (S₁, S₂, _{S3}) sont agencées au moins en partie à des positions identiques le long de la voie de guidage (13).

8. Système de transport (10), en particulier système multi-chariots, qui comprend plusieurs moteurs linéaires (11) qui sont agencés les uns à côté des autres et qui présentent une voie de guidage (13), plusieurs éléments de transport (15, 17, 19) qui peuvent être déplacés le long de la voie de guidage (13) au moyen des moteurs linéaires (11), et plusieurs stations (S₁, S₂, S₃) le long de la voie de guidage (13),
**caractérisé par** une unité de commande qui est réalisée pour exécuter le procédé selon l'une quelconque des revendications précédentes.

9. Système de transport (10) selon la revendication 8,
**caractérisé en ce que** les stations (S₁, S₂, S₃) sont agencées au moins en partie à des positions identiques le long de la voie de guidage (13).
